# EUROPÄISCHE PATENTSCHRIFT

(11) **EP 3 473 496 B1**
(45) Veröffentlichungstag und Bekanntmachung des Hinweises auf die Patenterteilung: **29.01.2020**
(21) Anmeldenummer: 18201667.5
(22) Anmeldetag: 22.10.2018
(51) Int. Cl.: B60R 11/02

(54) **HALTEVORRICHTUNG UND BAUGRUPPE MIT EINER HALTEVORRICHTUNG**
HOLDING DEVICE AND ASSEMBLY COMPRISING A HOLDING DEVICE
DISPOSITIF DE MAINTIEN ET MODULE DOTÉ D'UN DISPOSITIF DE MAINTIEN

(30) Priorität: 23.10.2017 DE 202017106399 U
(43) Veröffentlichungstag der Anmeldung: 24.04.2019
(73) Patentinhaber: Dr. Schneider Kunststoffwerke GmbH, 96317 Kronach Bayern (DE)
(72) Erfinder: Bayer, Matthias, 96364 Marktrodach (DE); Lang, Frederik, 96231 Bad Staffelstein (DE)

(56) Entgegenhaltungen:
- DE-U1- 29 710 898
- FR-A1- 2 908 710
- US-A- 4 852 178
- US-A- 5 867 583

## Beschreibung

Es werden eine Haltevorrichtung sowie eine Baugruppe mit einer Haltevorrichtung beschrieben, wobei die Haltevorrichtung Halteelemente aufweist, über welche eine zu befestigende Montageeinheit in einer Aufnahme gehalten werden kann.

Eine solche Montageeinheit kann beispielsweise einen Lautsprecher aufweisen. Lautsprecher weisen oftmals eine runde Ausgestaltung auf. Solche Lautsprecher werden dann in Haltevorrichtungen mit Halteelementen eingesetzt und verdreht, sodass es durch ein Hintergreifen der Halteelemente oder ein Eingreifen der Halteelemente in entsprechende Rastvorsprünge oder Ausnehmungen zu einer Verriegelung kommt.

Haltevorrichtungen können auch zur Befestigung von Beleuchtungseinrichtungen oder anderen Einheiten verwendet werden, welche vorzugsweise eine runde Form aufweisen und daher durch ein Verdrehen in der Aufnahme arretiert werden.

### Stand der Technik

DE 36 34 269 A1 offenbart eine Lautsprechereinheit mit einem Rahmen, in den der Lautsprecherkorb der Lautsprechereinheit von vorne über eine formschlüssige Rastverbindung einsetzbar ist. Durch eine federnde Rastverbindung und auf den Lautsprecherkorb wirkende Federzungen des Rahmens wird auch bei einem ovalen Lautsprecher erreicht, dass der Lautsprecher nach vorne herausnehmbar und im Wesentlichen spielfrei gelagert ist.

Eine Lautsprecheranordnung mit einem verdrehbaren Lautsprecherelement wird zudem in EP 2 332 782 B1 offenbart, wobei beim Verdrehen Haken in entsprechende Ausnehmungen eingreifen.

Die aus dem Stand der Technik bekannten Vorrichtungen weisen jedoch Nachteile auf. Bei Verklemm-Befestigungssystemen aus dem Stand der Technik besteht das Problem, dass bei kleinen Toleranzschwankungen große Schwankungen der Befestigungskräfte auftreten. Hierdurch sind keine gleichbleibenden Montagekräfte bzw. -momente gewährleistet. Die Lösung aus DE 36 34 269 A1 versucht eine spielfreie Lagerung vor allem für nicht kreisförmige Lautsprecher durch ein Einhängen und anschließendes Verschwenken des Lautsprechers zu erreichen. Da der Lautsprecher über die gefederten Arme nur leicht gehalten wird, ist keine sichere Aufnahme mit einer Verriegelung möglich. Der Lautsprecher kann daher einfach entnommen werden oder bei Vibrationen und Stößen, beispielsweise in einem Fahrzeug, herausfallen.

Haltevorrichtungen, wie beispielsweise in EP 2 332 782 B1 beschrieben, weisen zudem hohe Schwankungen in der Montagekraft zum Einsetzen der Lautsprecher bei einem relativ kleinen Toleranzband auf. Die Anforderungen hinsichtlich der Toleranzen und der Abmaße der Haltevorrichtungen sind sehr eng. Hierdurch sind die Kosten für derartige Haltevorrichtungen aufgrund der aufwendigen Herstellung und dem hohen Ausschuss erhöht.

Die DE 297 10 898 U1 offenbart eine Haltevorrichtung mit Halteelementen, wobei die Haltevorrichtung eine Aufnahme mit einer im Wesentlichen runden Öffnung aufweist. Die Halteelemente sind als Rastarme ausgebildet, wobei die Rastarme einen abstehenden Haken aufweisen.

### Aufgabe

Gegenüber dem Stand der Technik besteht die Aufgabe darin, eine Haltevorrichtung und eine Baugruppe mit einer Haltevorrichtung und einer darin aufgenommenen Montageeinheit anzugeben, wobei die Nachteile des Stands der Technik behoben werden und die Montagekräfte beim Einbringen der Montageeinheiten in die Haltevorrichtungen im Wesentlichen gleich bleiben, wodurch die Montage wesentlich vereinfacht wird. Insbesondere sollen gleichbleibende Montagekräfte auch bei einem größeren Toleranzband im Wesentlichen konstant bleiben.

### Lösung

Die Aufgabe wird durch eine Haltevorrichtung mit Halteelementen gelöst, über welche eine zu befestigende Montageeinheit in einer Aufnahme gehalten werden kann, wobei
- die Haltevorrichtung eine Aufnahme mit einer im Wesentlichen runden Öffnung aufweist,
- mindestens drei Halteelemente im Bereich der Öffnung angeordnet sind,
- die Halteelemente als Rastarme ausgebildet sind,
- die Rastarme einen abstehenden Haken aufweisen,
- die Rastarme einen Verbindungsabschnitt aufweisen, über welchen die Rastarme mit einem die Öffnung umgebenden Element der Aufnahme verbunden sind,
   und
- dass die Rastarme einen sich im Wesentlichen orthogonal zum Verbindungsabschnitt erstreckenden Hakenabschnitt aufweisen, wobei eine erste Erstreckungsrichtung des Verbindungsabschnitts und eine zweite Erstreckungsrichtung des Hakenabschnitts in einer Ebene liegen, sowie
- die Haken der Rastarme sich im Wesentlichen orthogonal zum Hakenabschnitt erstecken, wobei eine Ersteckungsrichtung für den Haken sich auf eine Achse des Hakens bezieht, die orthogonal zu der vorher beschriebenen Ebene ist.

Der abstehende Haken gewährleistet gleichbleibende Montagkräfte auch bei Toleranzschwankungen. Montageeinheiten weisen oftmals eine zweite Aufnahme mit einer definierten Ausgestaltung auf. Die zweite Aufnahme weist beispielsweise eine Aufnahmeöffnung auf, wobei an einer Seite zuerst eine Erhebung durch ein Halteelement überfahren werden muss, damit das Halteelement innerhalb der zweiten Aufnahme aufgenommen und eine Verriegelung bereitgestellt wird. Herkömmliche Halteelemente aus dem Stand der Technik weisen jedoch den Nachteil auf, dass bei kleinen Toleranzschwankungen sich große Schwankungen der Montagekräfte ergeben. Diese Nachteile beruhen vor allem auf der Ausgestaltung der Halteelemente des Stands der Technik.

Die hierin vorgeschlagene Haltevorrichtung mit als Rastarmen ausgebildeten Halteelementen mit abstehenden Haken ermöglicht jedoch das Einbringen der Rastarme in zweite Aufnahmen bzw. Öffnungen von Montageeinheiten wobei durch eine federnde Ausgestaltung der Rastarme die Montagekraft gleich bleibt. Der abstehende Haken dient zur Verriegelung im aufgenommenen Zustand. Bei einem Herstellungsverfahren für eine solche Haltevorrichtung kann daher auch ein größeres Toleranzband gefahren werden, wobei zusätzlich die Toleranzen der Montagekräfte kleiner werden.

Zusätzlich wird über den abstehenden Haken eine akustische Rückmeldung für das Erreichen einer Endposition gegeben.

Die Haltevorrichtung weist mindestens drei Halteelemente auf, wobei in weiteren Ausgestaltungen auch mehrere Halteelemente angeordnet sein können. In die im Wesentlichen runde Öffnung der Aufnahme können dann Montageeinheiten, wie beispielsweise Lautsprecher, eingesetzt und in der Aufnahme verdreht werden.

Durch die Rotation erfolgt die Verriegelung, wobei die Rastarme in entsprechende zweite Aufnahmen der Montageeinheit eingreifen. Eine Verriegelung durch Rotation weist ferner gegenüber einem Verschwenken, wie dies beispielsweise in DE 36 34 269 A1 offenbart ist, den Vorteil einer sicheren Befestigung auf. Ein Lösen der Verbindung über die Rastarme ist dennoch möglich. Ein Herausfallen oder Lösen der Verbindung, wie beispielsweise bei einem Einhängen wie in DE 36 34 269 A1 beschrieben, wird jedoch verhindert.

Die Rastarme weisen einen Verbindungsabschnitt auf, über welchen die Rastarme mit einem die Öffnung umgebenden Element der Aufnahme verbunden sind. Das Element kann beispielsweise ein die Öffnung umgebender Rand oder eine Wand bzw. ein Wandabschnitt sein.

Die Rastarme weisen ferner einen sich im Wesentlichen orthogonal zum Verbindungsabschnitt erstreckenden Hakenabschnitt auf. Der Hakenabschnitt kann hierbei federnd ausgebildet sein, sodass beim Überfahren einer Erhebung in einer zweiten Aufnahme einer Montageeinheit die Verlagerung des Hakens ermöglicht wird.

Die Haken der Rastarme erstrecken sich im Wesentlichen orthogonal zum Hakenabschnitt. Die Auslenkung des Hakenabschnitts beim Überfahren einer Erhebung der zweiten Aufnahme einer Montageeinheit kann daher gezielt erfolgen, wodurch die Montagekräfte beim Zusammenbau im Wesentlichen konstant gehalten werden können. Bei der Auslenkung des Hakenabschnitts kann zudem ein Moment auf den Verbindungsabschnitt wirken.

Die Rastarme können im Übergang vom Hakenabschnitt zum Haken eine Schräge aufweisen, die einem freien Ende des Hakens gegenüber liegt. Die Schräge stellt sicher, dass es beim Überfahren einer vorstehend erwähnten Erhebung der zweiten Aufnahme einer Montageeinheit zu keinem Blockieren kommt. Die Montagekräfte beim Einbringen einer Montageeinheit in die Haltevorrichtung können hierdurch im Wesentlichen gleich bleibend gehalten werden.

Die Rastarme können gleichmäßig verteilt an der Aufnahme angeordnet sein. Die gleichmäßige Anordnung dient ebenfalls zur Bereitstellung gleichbleibender Montagekräfte, da bei der Rotation einer Montageeinheit keine Bereiche mit höheren Widerständen auftreten. Solche Bereiche könnten sich beispielsweise dann ergeben, wenn zwei Rastarme einen geringen Abstand zueinander aufweisen und zwischen diesen ein relativ großer Bereich ohne Rastarm ausgebildet ist.

Die Anzahl der Rastarme ergibt sich durch die erforderliche Haltekraft und die Größe der Montageeinheit sowie der Aufnahme. Zudem kann die Ausbildung der Rastarme festlegen, wie viele Rastarme erforderlich sind. Bei einer Vielzahl von Rastarmen kann eine stärkere Befestigung bereitgestellt werden, jedoch sind dann in vielen Fällen auch die Montagekräfte erhöht.

Die Rastarme können aus einem Kunststoff gefertigt sein. Kunststoffe eignen sich für Halteelemente bzw. Haltevorrichtungen allgemein durch ihr geringes Gewicht und die schnelle Fertigung. Zudem treten bei Kunststoffen keine Korrosion oder ähnliche Verschleißerscheinungen auf, sodass auch nach längerer Standzeit ein Lösen der Verbindung bereitgestellt werden kann. Die Kunststoffe können in Hinblick auf die geforderten Eigenschaften hinsichtlich einer Materialbeanspruchung, beispielsweise in einem Fahrzeug, Zusätze aufweisen. Zudem kann die Auswahl der Kunststoffe entsprechend erfolgen, sodass die geforderten Eigenschaften erreicht werden.

Die Haltevorrichtung kann in einem Spritzgussverfahren hergestellt sein. Spritzgussverfahren eignen sich insbesondere, weil die Haltevorrichtungen in hoher Stückzahl kostengünstig hergestellt werden können.

Die Haltevorrichtung kann Teil einer Tragstruktur eines Kraftfahrzeugteils sein. So kann die Tragstruktur weitere Haltevorrichtungen aufweisen. In die Haltevorrichtungen können beispielsweise mehrere Lautsprecher und/oder Beleuchtungseinrichtungen eingesetzt werden. Anstelle von Beleuchtungseinrichtungen oder Lautsprechern können auch "Dummys" oder Blenden eingesetzt werden, wenn einzelne Haltevorrichtungen nicht belegt werden sollen.

Die vorstehend genannte Aufgabe wird auch durch eine Baugruppe gelöst, die mindestens eine Haltevorrichtung der vorstehend beschriebenen Varianten und eine damit verbundene Montageeinheit aufweist, wobei die Montageeinheit eine der Anzahl der Rastarme korrespondierende Anzahl an zweiten Aufnahmen aufweist, in welchen die Rastarme eingesetzt sind.

Zur Bereitstellung einer solchen Baugruppe können die Montageeinheiten mit im Wesentlichen gleichbleibenden Montagekräften in die Haltevorrichtungen eingebracht werden. Durch die Ausgestaltung der Rastarme der Haltevorrichtungen bleiben insbesondere die Montagekräfte auch bei einem größeren Toleranzband im Wesentlichen gleich.

Die zweiten Aufnahmen können eine Rampe aufweisen und ein eingesetzter Rastarm kann hierüber gegen ein Herausbewegen gesichert sein. Zum Einbringen und zum Verriegeln der Montageeinheit wird diese innerhalb einer Aufnahme verdreht. Dabei wird der Haken eines Rastarms über eine Erhebung gefahren, wobei ein Auslenken des Rastarms erfolgt. Nach dem Überfahren der Erhebungen liegt der Haken des Rastarms an der Rampe an und wird gegen das Herausbewegen gesichert. Um ein Überfahren der Erhebung sicherzustellen, ist der Rastarm so ausgebildet, dass dieser leicht federnd ist.

Die zweiten Aufnahmen können eine Schräge aufweisen, welche im Bereich einer Einführöffnung angeordnet ist. Die Einführöffnung erleichtert das Einbringen des Rastarms in die zweite Aufnahme, wobei über die Schräge ein Auslenken des Rastarms erfolgt. Beim Einbringen in die zweite Aufnahme gleitet der Haken an der Schräge entlang und bewirkt dabei ein Auslenken des Rastarms. Nach dem Überfahren der Schräge gelangt der Rastarm wieder in seine ursprüngliche Stellung. Das Überfahren der Schräge kann akustisch wahrgenommen werden, wobei ein Geräusch erzeugt wird, wenn der Haken an einer entsprechenden Wand innerhalb der zweiten Aufnahme in Anlage kommt.

Die Rampe und die Schräge können sich dabei gegenüberliegen und Teil eines Hakens sein. Ein solcher Haken bildet die Erhebung einer zweiten Aufnahme, welcher beim Einbringen der Rastarme überfahren werden muss. Der Haken weist damit zu beiden Seiten eine Schräge bzw. Rampe auf, sodass sowohl das Einbringen in die zweite Aufnahme erleichtert als auch ein Herausbewegen der Rastarme möglich ist. Die Rampe weist aber eine deutlich größere Steigung als die Schräge auf, sodass das Lösen der Verbindung schwerer erreicht werden kann als das Einbringen der Rastarme in die zweiten Aufnahmen. Eine deutlich steilere Rampe bewirkt zudem ein schnelles Zurücckehren des Rastarms in seine nicht ausgelenkte Stellung. Die Ausbildung der Schräge ist zudem maßgeblich für die erforderliche Montagkraft. Vorzugsweise weist die Schräge einen Winkel zwischen 30° und 55° auf. Vorzugsweise kann die Schräge im Wesentlichen einen 45° Winkel aufweisen. Hierüber wird sichergestellt, dass die Montagekraft durch den kontinuierlichen Anstieg auch bei Schwankungen in der Ausbildung der Rastarme gleich bleibt.

Die Montageeinheit kann einen Lautsprecher oder eine Beleuchtungseinrichtung sein. In weiteren Ausführungsformen kann die Montageeinheit auch ein "Dummy" oder eine Blende sein, welche eine Aufnahme der Haltevorrichtung überdeckt. Selbstverständlich können auch andere Montageeinheiten, wie becherartige Aufnahmefächer oder elektrische und/oder elektronische Kontakteinrichtungen (zum Beispiel Steckdose) über eine solche Halteanordnung beispielsweise mit einer Tragstruktur verbunden werden.

Eine Tragstruktur kann beispielsweise auch aus Kunststoff bestehen und im Bereich einer A, B oder C-Säule oder eines Fahrzeugarmaturenbretts sowie im Bereich einer Mittelkonsole angeordnet werden. Auch kann eine solche Tragstruktur im Bereich des Fußraums oder im Fahrzeugheck angeordnet werden.

Weitere Vorteile, Merkmale sowie Ausgestaltungsmöglichkeiten ergeben sich aus der nachfolgenden Figurenbeschreibung von nicht einschränkend zu verstehenden Ausführungsbeispielen.

### Kurbeschreibung der Figuren

In den Zeichnungen zeigt:
- Fig. 1: eine perspektivische Darstellung einer Tragstruktur mit einer Haltevorrichtung in einer Ausführungsform des Stands der Technik;
- Fig. 2: eine perspektivische Darstellung eines Teils einer Aufnahme mit einem Rastelement der Haltevorrichtung von Fig. 1;
- Fig. 3: eine perspektivische Darstellung einer Lautsprechereinheit;
- Fig. 4: eine schematische Schnittansicht durch die Tragstruktur von Fig. 1 mit einer eingesetzten Lautsprechereinheit;
- Fig. 5: eine schematische Darstellung eines in eine Aufnahme der Lautsprechereinheit von Fig. 3 eingesetzten Rastelements der Tragstruktur von Fig. 1;
- Fig. 6: eine perspektivische Darstellung einer Tragstruktur mit einer Haltevorrichtung der hierin offenbarten technischen Lehre;
- Fig. 7: eine weitere perspektivische Darstellung der Tragstruktur mit einer Haltevorrichtung von Fig. 6;
- Fig. 8: eine vergrößerte Darstellung einer Aufnahme mit einem Rastarm der Haltevorrichtung von Fig. 6; und
- Fig. 9: eine schematische Darstellung eines Rastarms der Haltevorrichtung von Fig. 6 und einer Aufnahme der Lautsprechereinheit von Fig. 3 in verschiedenen Zuständen.

In den Zeichnungen mit gleichen Bezugszeichen versehene Teile entsprechen im Wesentlichen einander, sofern nichts anderes angegeben ist. Darüber hinaus wird darauf verzichtet Bestandteile zu zeigen und zu beschreiben, welche nicht wesentlich zum Verständnis der hierin offenbarten technischen Lehre sind.

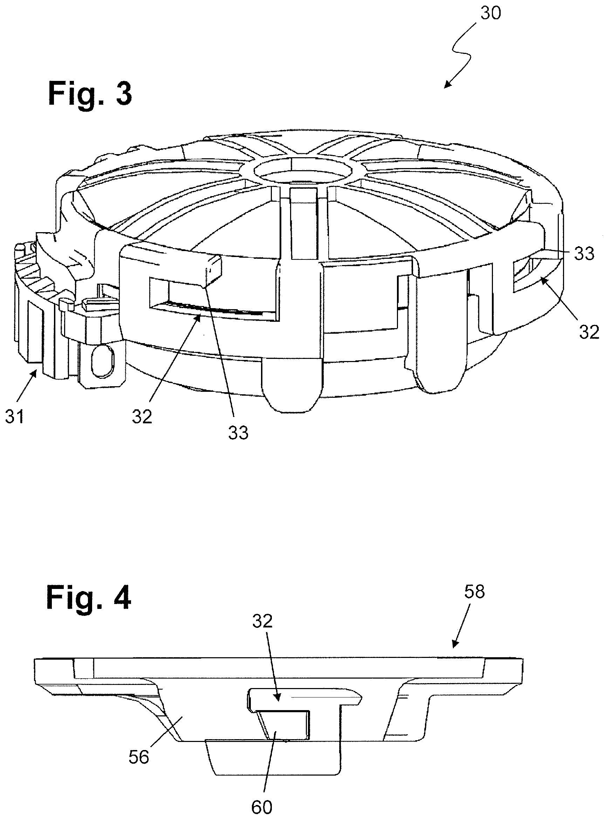

Fig. 3 zeigt eine perspektivische Darstellung einer Lautsprechereinheit 30. Die Lautsprechereinheit 30 weist üblicherweise einen Magneten, eine Schwingspule und eine Membran sowie weitere Bestandteile auf. Beispielsweise kann die Lautsprechereinheit 30 eine Abdeckung aufweisen. Die Lautsprechereinheit 30 weist einen Lautsprecherkorb auf, in dem die wesentlichen Komponenten wie die Membran und die Schwingspule und der Magnet angeordnet sind. Der Lautsprecherkorb weist an seinem äußeren Umfang einen Anschluss 21 sowie zweite Aufnahmen 32 auf. Über den Anschluss 31 erfolgt eine Versorgung mit elektrischen Signalen, die zur Schallerzeugung für den Lautsprecher erforderlich sind. Die zweiten Aufnahmen 32 erstrecken sich umfangsseitig um die Lautsprechereinheit 30. Die Lautsprechereinheit 30 weist in dem in Fig. 3 gezeigten Beispiel drei solcher zweiten Aufnahmen 32 auf. Die Aufnahmen 32 sind so ausgebildet, dass in die Aufnahmen 32 Halteelemente eingesetzt und durch eine Rotation der Lautsprechereinheit 30 eine Verriegelung der Lautsprechereinheit 30 mit einer Haltevorrichtung erfolgt. Die zweiten Aufnahmen 32 weisen hierzu einen Haken 33 auf. Der Haken 33 verkleinert die Weite der Einführöffnung 34.

Eine solche Ausgestaltung von Lautsprechereinheiten 30 findet sich häufig. Zur Montage dieser Lautsprechereinheiten 30 werden diese beispielsweise von unten in eine Aufnahme eingesetzt und verdreht. Dabei gelangen Halteelemente in die zweiten Aufnahmen 32. Hierüber wird die Lautsprechereinheit 30 gehalten.

Aufgrund von Toleranzen bei Haltevorrichtungen und den Toleranzen der zweiten Aufnahmen 32 variieren die erforderlichen Montagekräfte beim Einsetzen und Arretieren von Lautsprechereinheiten 30 erheblich. Um die Montagekräfte insbesondere für eine automatische oder maschinengestützte Montage im Wesentlichen gleich zu halten, werden für die Lautsprechereinheiten 30 und insbesondere für die Haltevorrichtungen 50 aus dem Stand der Technik sehr enge Toleranzbänder vorgegeben. Problematisch hierbei ist aber, dass trotz enger Toleranzvorgaben geringe Abweichungen schon erhebliche Unterschiede bei den Montagekräften hervorrufen.

### Stand der Technik

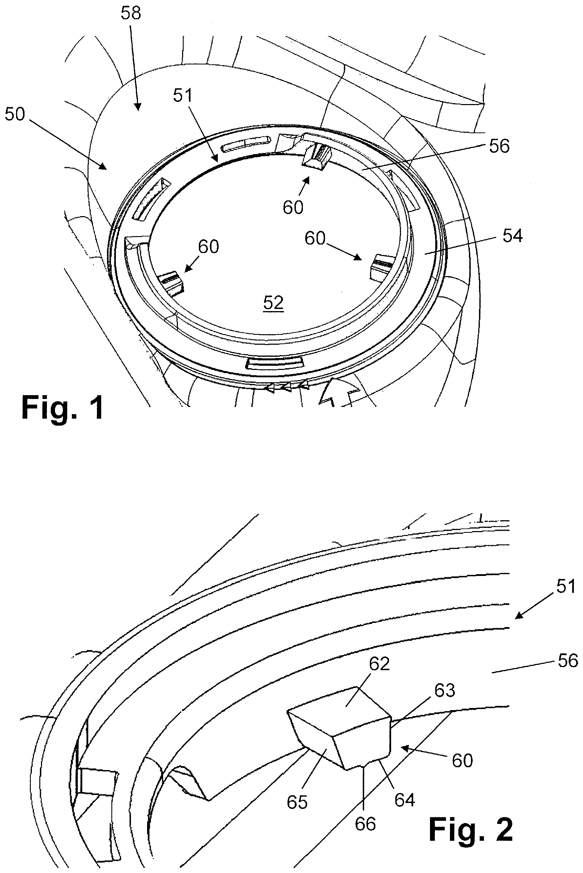

Fig. 1 zeigt eine perspektivische Darstellung einer Tragstruktur 58 mit einer Haltevorrichtung 50 in einer Ausführung des Stands der Technik. Fig. 1 zeigt den Blick auf die Haltevorrichtung 50 von unten. Die Tragstruktur 58 besteht aus einem Kunststoff und weist in einem Aufnahmebereich die Haltevorrichtung 50 auf. Die Haltevorrichtung 50 weist eine Aufnahme 51 mit einer Öffnung 52 auf. Die Öffnung 52 ist kreisförmig ausgebildet. Die Öffnung 52 ist von einem Rand 54 umgeben. Abschnittsweise erstreckt sich eine Wand 56 um den Rand 54 und die Öffnung 52. An dieser Wand 56 sind drei Rastelemente 60 angeordnet.

Fig. 2 zeigt eine perspektivische Darstellung eines Teils einer Aufnahme 51 mit einem Rastelement 60 der Haltevorrichtung 50 von Fig. 1 aus dem Stand der Technik. Das Rastelement 60 weist vier Wände 62, 63, 64 und 65 auf. An der Wand 64 erstreckt sich eine Rasterhebung 66. Die Rasterhebung 66 verläuft dabei über die gesamte Wand 64. Die Wand 64 liegt im Wesentlichen der Wand 62 parallel gegenüber. Die Wand 63 erstreckt sich im Wesentlichen lotrecht zu den Wänden 62 und 64, wobei die Wand 65 einen Winkel < 90° zu der Wand 62 einschließt.

Fig. 4 zeigt eine schematische Schnittansicht durch die Tragstruktur 58 von Fig. 1 mit einer eingesetzten Lautsprechereinheit 30. Das Rastelement 60 ist im verriegelten und aufgenommenen Zustand der Lautsprechereinheit 30 in der zweiten Aufnahme 32 aufgenommen. Über den Haken 33 und die Rasterhebung 66 wird das Rastelement 60 in der zweiten Aufnahme 32 gehalten.

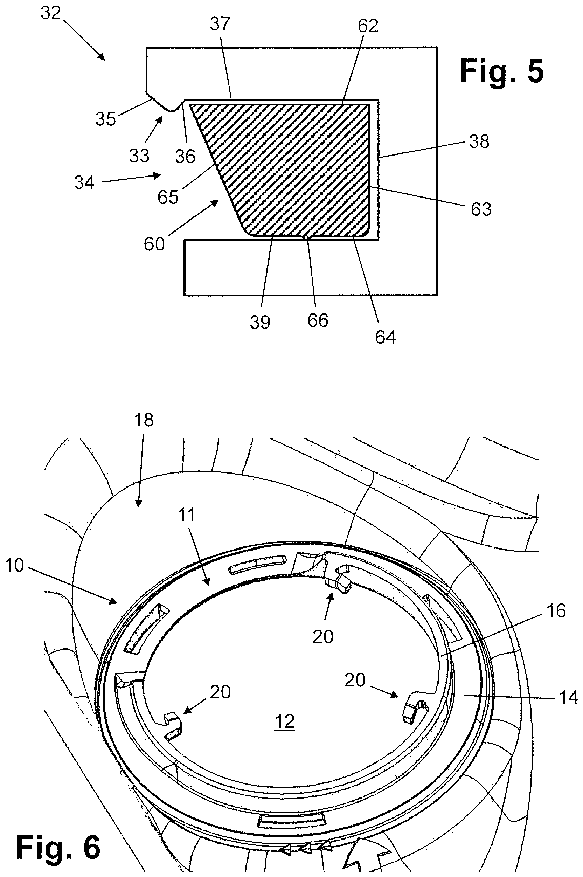

Fig. 5 zeigt eine schematische Darstellung eines in eine Aufnahme 32 der Lautsprechereinheit 30 von Fig. 3 eingesetzten Rastelementes 60 der Tragstruktur 58 von Fig. 1 in einer vergrößerten Darstellung. In der schematischen Darstellung ist gezeigt, wie das Rastelement 60 über den Haken 33 und die Rasterhebung 66 gehalten wird. Die zweite Aufnahme weist den Haken 33 auf, wobei der Haken 33 eine Schräge 35 und eine Rampe 36 aufweist. Die Schräge 35 dient dazu, das Einführen des Rastelements 60 zu erleichtern. Die Rampe 36 weist eine deutliche größere Steigung als die Schräge 35 auf, sodass ein Herausbewegen des Rastelements 60 durch Rotation in einer der Verriegelungseinrichtung entgegengesetzten Richtung zwar möglich aber schwerer durchführbar ist als das Einbringen. Der Einführöffnung 34 gegenüber liegt eine Wand 38. Zudem weist die zweite Aufnahme 32 zwei gegenüberliegende Wände 37 und 39 auf, die im Wesentlichen orthogonal zu der Wand 38 verlaufen. Im eingesetzten Zustand des Rastelements 60 wird dieses durch den Haken 33 und über die Rasterhebung 66 innerhalb der zweiten Aufnahme 32 unter einer Klemmwirkung gehalten. Aus der schematischen Darstellung von Fig. 5 ist ersichtlich, dass bei Abweichungen von einer definierten Größe des Rastelements 60, insbesondere dessen Querschnitts, die Montagekräfte beim Einbringen in die zweite Aufnahme 32 stark variieren. Insbesondere schon kleinere Abweichungen innerhalb eines zulässigen Toleranzbandes können dabei erhebliche Abweichungen von einer definierten Normmontagekraft hervorrufen. Um überhaupt ein Einsetzen der Rastelemente 60 in die zweiten Aufnahmen 32 bereitzustellen, dürfen die Rastelemente nur sehr geringe Abweichungen aufweisen. Da die Rastelemente 60 als Teil von Spritzgusselementen wie beispielsweise der kompletten Tragstruktur 58, ausgebildet sind, unterliegen die Rastelemente 60 den üblicherweise bei Spritzgussprozessen auftretenden Toleranzen. Um sich innerhalb der vorgegebenen Toleranzgrenzen zu bewegen, müssen die Rastelemente 60 entweder nachbearbeitet werden, was erhebliche Kosten hervorruft, oder solche Tragstrukturen 58 müssen als Ausschuss entsorgt oder mit stark variierenden Montagekräften in die zweiten Aufnahmen 32 eingebracht werden.

Variierende Montagekräfte sind jedoch vor allem für eine automatische und/oder maschinenunterstützte Montage nachteilig. Beispielsweise kann es bei zu hohen erforderlichen Montagekräften zu einer Zerstörung der Haltevorrichtung 50 durch Brechen der Rastelemente 60 oder durch eine Zerstörung der zweiten Aufnahmen 52 kommen.

Eine weitere Maßnahme dem entgegenzutreten besteht in einer zeitaufwendigen Herstellung der Haltevorrichtungen 50, wobei die einzelnen Parameter für das Spritzgussteil entsprechend überwacht werden müssen.

Die aus dem Stand der Technik üblicherweise bekannten Haltevorrichtungen 50 weisen daher große Nachteile auf und verursachen mitunter sehr hohe Kosten.

### Ausführliche Beschreibung eines Ausführungsbeispiels

Fig. 6 zeigt eine perspektivische Darstellung einer Tragstruktur 18 mit einer Haltevorrichtung 10 der hierin offenbarten technischen Lehre. Fig. 6 zeigt den Blick auf die Haltevorrichtung 10 von unten. Die Tragstruktur 18 entspricht im Wesentlichen der Tragstruktur 58 und besteht aus Kunststoff. Im Unterschied zur Tragstruktur 58 gemäß der bekannten Ausführungsform weist die hierin beschriebene Tragstruktur 18 eine Haltevorrichtung 10 mit einer Aufnahme 11 auf, die von einem Rand 14 umgeben ist, wobei sich an dem Rand 14 eine Wand 16 abschnittsweise um eine Öffnung 12 erstreckt, an der drei Rastarme 20 angeordnet sind. Die Rastarme 20 und die Bestandteile der Haltevorrichtung 10 bestehen ebenfalls aus Kunststoff und können in die Tragstruktur 18 lösbar oder unlösbar eingebracht oder als Teil der Tragstruktur 18 mit dieser zusammen ausgebildet sein.

Vorzugsweise besteht die Haltevorrichtung 10 aus einem Kunststoff und wird in einem Spritzgussverfahren hergestellt. Dabei kann die Haltevorrichtung 10 zusammen mit der Tragstruktur 18 hergestellt werden. Die Tragstruktur 18 kann in einem Fahrzeug angeordnet sein. Über die Haltevorrichtung 10 wird eine Lautsprechereinheit 30, wie bereits beschrieben, eingesetzt und sicher gehalten.

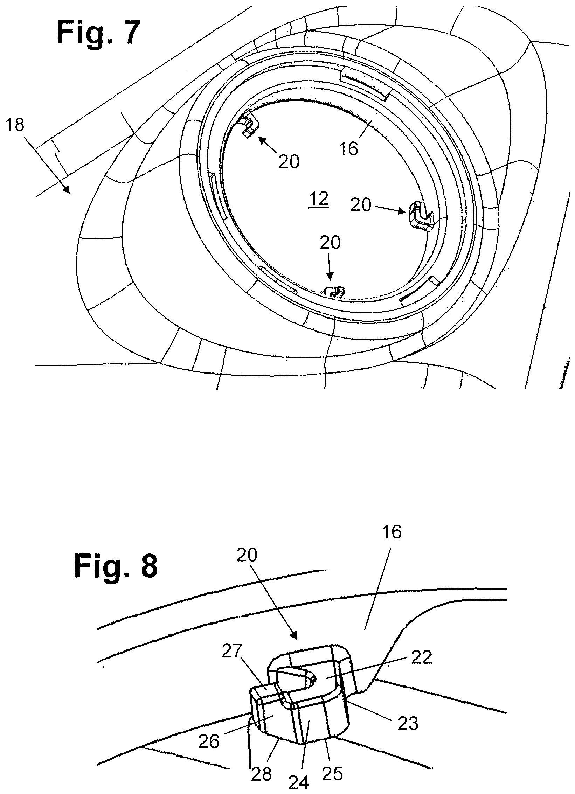

Fig. 7 zeigt eine weitere perspektivische Darstellung der Tragstruktur 18 mit einer Haltevorrichtung 10 von Fig. 6 mit Blick von oben auf die Haltevorrichtung 10. Die Lautsprechereinheit 30 wird von unten in die Öffnung 12 eingesetzt, wobei die Lautsprechereinheit 30 so eingesetzt wird, dass die Rastarme 20 über die nach oben hin geöffneten Bereiche in die zweiten Aufnahmen 32 eingebracht werden. Anschließend wird die Lautsprechereinheit 30 verdreht, wobei es zu einer Verriegelung kommt. Bei der Rotation der Lautsprechereinheit 30 gelangen die Rastarme 20 in die zweiten Aufnahmen 32 und halten die Lautsprechereinheit 30 in Position.

Fig. 8 zeigt eine vergrößerte Darstellung einer Aufnahme 11 mit einem Rastarm 20 der Haltevorrichtung 10 von Fig. 6. Der Rastarm 20 ist über einen Verbindungsabschnitt 22 mit der Wand 16 verbunden. Vorzugsweise ist der Rastarm 20 einstückig mit der Wand 16 hergestellt und an dieser ausgebildet. Der Verbindungsabschnitt 22 erstreckt sich im Wesentlichen radial von der zumindest abschnittsweise die Öffnung 12 umgebenden Wand 16 nach innen. Von dem Verbindungsabschnitt 22 erstreckt sich ein Hakenabschnitt 24, der sich ebenfalls im Wesentlichen orthogonal zu dem Verbindungsabschnitt 22 erstreckt, wobei der Verbindungsbereich zwischen Verbindungsabschnitt 22 und Hakenabschnitt 24 gekrümmt ausgebildet ist. Der Hakenabschnitt 24 weist an einem vorderen Ende einen Haken 26 auf, dessen freies Ende 27 sich im Wesentlichen orthogonal zur Längsachse des Hakenabschnitts 24 erstreckt. Der Hakenabschnitt 24 weist in einem Übergangsbereich zu dem Haken 26 eine Schräge 28 auf, die dem freien Ende 27 des Hakens 26 gegenüberliegt. Die Schräge 28 ermöglicht ein Auslenken des Rastarms 20 beim Einbringen in die zweite Aufnahme 32.

Der Rastarm 20 weist eine erste Seite 23 auf, die in einem eingesetzten Zustand in die zweite Aufnahme 32 mit einer korrespondierenden Wand 38 im Wesentlichen in Kontakt steht und weist eine Seite 25 auf, die im eingesetzten Zustand in die zweite Aufnahme 32 mit einer korrespondierenden Wand 39 in Kontakt steht.

Der Übergang von dem Verbindungsabschnitt 22 zu der Wand 16 kann wie in Fig. 8 dargestellt verbreitert ausgebildet sein. Die Ausgestaltung der Rastarme 20 erfolgt im Hinblick auf die federnden Eigenschaften des Rastarms 20 und der fertigungstechnischen Gegebenheiten (Entformen beim Spritzgießen).

Die Erstreckung der einzelnen Abschnitte der Rastarme 20 bezieht sich auf deren Mittenachse, die entlang der Längsseite verläuft. Dabei ist die erste Erstreckungsrichtung für den Verbindungsabschnitt 22 durch die radiale Ausrichtung gegenüber der Wand 16 definiert. Die Erstreckungsrichtung des Hakenabschnitts 24 ist durch die orthogonale Anordnung zu der ersten Erstreckungsrichtung definiert, wobei die zweite Erstreckungsrichtung des Hakenabschnitts 24 und die erste Erstreckungsrichtung des Verbindungsabschnitts 22 in einer Ebene liegen. Die Erstreckungsrichtung für den Haken 26 bezieht sich auf eine Achse des Hakens 26, die orthogonal zur der vorher beschriebenen Ebene steht.

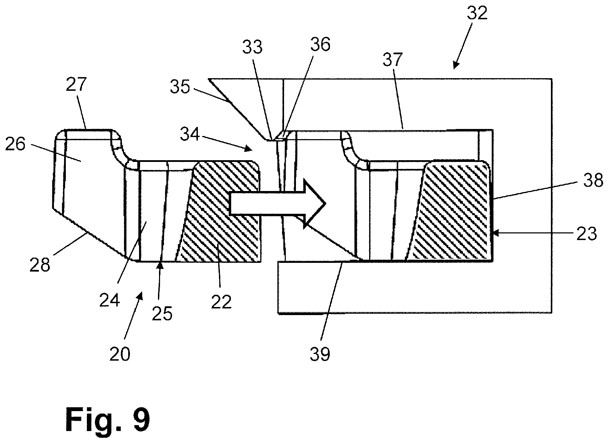

Fig. 9 zeigt eine schematische Darstellung eines Rastarms 20 der Haltevorrichtung 10 von Fig. 6 und einer Aufnahme 32 der Lautsprechereinheit 30 von Fig. 3 in verschiedenen Zuständen.

Fig. 9 zeigt die zweite Aufnahme 32 mit dem Haken 33 und der Schräge 35 und der Rampe 36 sowie den Wänden 37, 38 und 39. Über eine Einführöffnung 34 kann der Rastarm 20 in die zweite Aufnahme 32 eingebracht werden.

Fig. 9 zeigt den Rastarm 20 in einer Position vor dem Einbringen in die zweite Aufnahme 32 und in einem in die zweite Aufnahme 32 eingesetzten Zustand. Der Pfeil zeigt die Bewegungsrichtung beim Einbringen des Rastarms 20 durch Rotation der Lautsprechereinheit 30.

Beim Einbringen in die zweite Aufnahme 32 erfolgt ein Auslenken des Rastarms 20 durch ein Nachuntendrücken (in Blickrichtung auf Fig. 9) des Hakens 26 durch die Ausbildung der Schräge 35. Um ein weiteres Einführen des Rastarmes 20 in die zweite Aufnahme 32 zu gewährleisten, ist die Schräge 28 vorgesehen. Der Rastarm 20 kann daher über den Haken 26 und die Schräge 35 nach unten gedrückt werden, ohne dass es zu einem Blockieren kommt. Nachdem der Haken 26 den Haken 33 überfahren hat, gleitet dieser durch die Rampe 36 nach unten, wobei das freie Ende 27 des Hakens 26 in Anlage mit der korrespondierenden Wand 37 kommt. Das Zurückfedern des Rastarms 20 erzeugt auch ein Geräusch, was eine akustische Rückmeldung über eine ordnungsgemäße Verrastung liefert.

Im eingesetzten Zustand des Rastarmes 20 kann zudem die Seite 23 an der Wand 38 anliegen. Ferner liegt die Seite 25 an der Wand 39 an, sodass der Rastarm 20 über das freie Ende 27 und die Seite 25 unter Spannung zwischen den Wänden 37 und 39 gehalten ist. Wegen der Klemmwirkung kann auch ein Abstand zwischen der Seite 23 und der Wand 38 bestehen. Es ist damit nicht zwingend erforderlich, dass die Seite 23 vollflächig an der Wand 38 anliegt. Die Ausgestaltung der Rastarme 20 als Halteelemente für die Haltevorrichtung 10 bietet den Vorteil, dass die Montagekräfte zum Einbringen der Rastarme 20 im Wesentlichen gleich bleiben. Dabei können auch größere Toleranzbänder für die Rastarme 20 gefahren werden, ohne dass Montagekräfte hierdurch erhöht oder verringert werden. Die Ausbildung der Rastarme 20 stellt dabei sicher, dass die Montagekräfte im Wesentlichen konstant bleiben.

Die gleichbleibenden Montagekräfte werden dadurch bereitgestellt, dass ein Auslenken durch die federnde Ausgestaltung des Rastarmes 20 beim Einbringen in die zweiten Aufnahmen 32 und ein Verklemmen zwischen den Seiten 37 und 39 erfolgt. Die Schräge 35 unterstützt dabei das Einbringen der Rastarme 20 in die zweiten Aufnahmen 32. Würde das freie Ende 27 bei einem Rastarm 20 etwas weiter nach oben stehen, so würde über die Schräge 35 dennoch ein Auslenken und damit ein Einbringen des Rastarmes 20 in die zweite Aufnahme 32 erreicht werden, wobei die Montagekraft zum Einbringen des Rastarms 20 genauso groß ist wie für einen Rastarm 20 mit einem etwas tieferen freien Ende 27. Die Unterschiede in der Höhe der abstehenden freien Enden 27 können nach dem Überfahren des Hakens 33 zu variierenden Haltekräften innerhalb der zweiten Aufnahme 32 führen. Jedoch ist die Montagekraft zum Einbringen der verschiedenen Rastarme 20 gleich groß. Eine mindesterforderliche Haltekraft innerhalb der zweiten Aufnahme 32, über welche eine sichere Halterung erreicht wird, wird beispielsweise über eine untere Toleranzgrenze festgelegt. Liegen die Rastarme 20 über dieser Toleranzgrenze, können die Befestigungskräfte innerhalb der zweiten Aufnahme 32 erhöht sein. Eine Erhöhung der Befestigungskräfte wirkt sich dabei jedoch nicht auf das Einbringen und damit die Montagekräfte aus und gewährleistet trotzdem eine sichere Aufbewahrung bzw. Anordnung der Lautsprechereinheit 30 innerhalb der zweiten Aufnahme 32 bzw. der Öffnung 12.

Die Ausbildung der Rastarme 20 weist daher gegenüber aus dem Stand der Technik bekannten Haltevorrichtungen 50 mit Rastelementen 60 sowie anderen Verriegelungseinrichtungen den Vorteil auf, dass die Montagekräfte auch bei größeren Toleranzbändern gleich bleiben. Eine Vergrößerung der Toleranzbänder wirkt sich weiter kostengünstig auf die Herstellung solcher Haltevorrichtungen aus, da ein geringerer Ausschuss produziert wird und die Anforderungen an den Spritzgussprozess ebenfalls reduziert sind.

### Bezugszeichenliste

- 10: Haltevorrichtung
- 11: Aufnahme
- 12: Öffnung
- 14: Rand
- 16: Wand
- 18: Tragstruktur
- 20: Rastarm
- 22: Verbindungsabschnitt
- 23: Seite
- 24: Hakenabschnitt
- 25: Seite
- 26: Haken
- 27: freies Ende
- 28: Schräge
- 30: Lautsprechereinheit
- 31: Anschluss
- 32: Aufnahme
- 33: Haken
- 34: Einführöffnung
- 35: Schräge
- 36: Rampe
- 37: Wand
- 38: Wand
- 39: Wand
- 50: Haltevorrichtung
- 51: Aufnahme
- 52: Öffnung
- 54: Rand
- 56: Wand
- 58: Tragstruktur
- 60: Rastelement
- 62: Wand
- 63: Wand
- 64: Wand
- 65: Wand
- 66: Rasterhebung

## Patentansprüche

1. Haltevorrichtung mit Halteelementen, über welche eine zu befestigende Montageeinheit in einer Aufnahme (11) gehalten werden kann, wobei
- die Haltevorrichtung (10) eine Aufnahme (11) mit einer im Wesentlichen runden Öffnung (12) aufweist,
- mindestens drei Halteelemente im Bereich der Öffnung (12) angeordnet sind,
- die Halteelemente als Rastarme (20) ausgebildet sind,
- die Rastarme (20) einen abstehenden Haken (26) aufweisen, und
- die Rastarme (20) einen Verbindungsabschnitt (22) aufweisen, über welchen die Rastarme (20) mit einem die Öffnung (12) umgebenden Element der Aufnahme (11) verbunden sind,
**dadurch gekennzeichnet,**
- **dass** die Rastarme (20) einen sich im Wesentlichen orthogonal zum Verbindungsabschnitt (22) erstreckenden Hakenabschnitt (24) aufweisen, wobei eine erste Erstreckungsrichtung des Verbindungsabschnitts (22) und eine zweite Erstreckungsrichtung des Hakenabschnitts (24) in einer Ebene liegen, und
- **dass** die Haken (26) der Rastarme (20) sich im Wesentlichen orthogonal zum Hakenabschnitt (24) erstrecken, wobei eine Erstreckungsrichtung für den Haken (26) sich auf eine Achse des Hakens (26) bezieht, die orthogonal zu der vorher beschriebenen Ebene steht.

2. Haltevorrichtung nach Anspruch 1, wobei die Rastarme (20) im Übergang vom Hakenabschnitt (24) zum Haken (26) eine Schräge (28) aufweisen, die dem freien Ende (27) des Hakens (26) gegenüberliegt.

3. Haltevorrichtung nach einem der Ansprüche 1 oder 2, wobei die Rastarme (20) gleichmäßig verteilt an der Aufnahme (11) angeordnet sind.

4. Haltevorrichtung nach einem der Ansprüche 1 bis 3, wobei die Rastarme (20) aus einem Kunststoff gefertigt sind.

5. Haltevorrichtung nach einem der Ansprüche 1 bis 4, wobei die Haltevorrichtung (10) in einem Spritzgussverfahren hergestellt ist.

6. Haltevorrichtung nach einem der Ansprüche 1 bis 5, wobei die Haltevorrichtung (10) Teil einer Tragstruktur (18) eines Kraftfahrzeugteils ist.

7. Baugruppe aufweisend mindestens eine Haltevorrichtung (10) nach einem der Ansprüche 1 bis 6 und eine damit verbundene Montageeinheit, wobei die Montageeinheit eine der Anzahl der Rastarme (20) korrespondierende Anzahl an zweiten Aufnahmen (32) aufweist, in welchen die Rastarme (20) eingesetzt sind.

8. Baugruppe nach Anspruch 7, wobei die zweiten Aufnahmen (32) eine Rampe (36) aufweisen und ein eingesetzter Rastarm (20) hierüber gegen ein Herausbewegen gesichert ist.

9. Baugruppe nach Anspruch 7 oder 8, wobei die zweiten Aufnahmen (32) eine Schräge (35) aufweisen, welche im Bereich einer Einführöffnung (34) angeordnet ist.

10. Baugruppe nach Anspruch 8 und 9, wobei die Rampe (36) und die Schräge (35) sich gegenüberliegen und Teil eines Hakens (33) sind.

11. Baugruppe nach einem der Ansprüche 7 bis 10, wobei die Montageeinheit ein Lautsprecher oder eine Beleuchtungseinrichtung ist.

## Claims

1. Holding device with holding elements by way of which a mounting unit, which is to be fastened, can be held in a receptacle (11), wherein
- the holding device (10) comprises a receptacle (11) with a substantially round opening (12),
- at least three holding elements are arranged in the region of the opening (12),
- the holding elements are constructed as detent arms (20),
- the detent arms (20) have a projecting hook (26) and
- the detent arms (20) have a connecting section (22) by way of which the detent arms (20) are connected with an element, which surrounds the opening (12), of the receptacle (11),
**characterised in that**
- the detent arms (20) have a hook section (24) extending substantially orthogonally to the connecting section (22), wherein a first length direction of the connecting section (22) and a second length direction of the hook section (24) lie in a plane, and
- the hooks (26) of the detent arms (20) extend substantially orthogonally to the hook section (24), wherein a length direction for the hooks (26) refers to an axis of the hook (26) orthogonal to the afore-mentioned plane.

2. Holding device according to claim 1, wherein the detent arms (20) have, at the transition from the hook section (24) to the hook (26), a chamfer (28) which is opposite the free end (27) of the hook (26).

3. Holding device according to one of claims 1 and 2, wherein the detent arms (20) are arranged in uniform distribution at the receptacle (11).

4. Holding device according to any one of claims 1 to 3, wherein the detent arms (20) are made from a plastics material.

5. Holding device according to any one of claims 1 to 4, wherein the holding device (10) is produced in an injection-moulding method.

6. Holding device according to any one of claims 1 to 5, wherein the holding device (10) is part of a support structure (18) of a motor vehicle component.

7. Subassembly comprising at least one holding device (10) according to any one of claims 1 to 6 and a mounting unit connected therewith, wherein the mounting unit has a number, which corresponds with the number of detent arms (20), of second receptacles (32) into which the detent arms (20) are inserted.

8. Subassembly according to claim 7, wherein the second receptacles (32) comprise a ramp (36) and an inserted detent arm (20) is secured by that against being moved out.

9. Subassembly according to claim 7 or 8, wherein the second receptacles (32) have a chamfer (35) which is arranged in the region of an introducing opening (34).

10. Subassembly according to claim 8 and 9, wherein the ramp (36) and the chamfer (35) are opposite one another and are part of a hook (33).

11. Subassembly according to any one of claims 7 to 10, wherein the mounting unit is a loudspeaker or a lighting device.

## Revendications

1. Dispositif de maintien avec éléments de maintien, par le biais desquels une unité de montage à fixer peut être maintenue dans un logement (11), dans lequel
- le dispositif de maintien (10) présente un logement (11) avec une ouverture sensiblement circulaire (12),
- au moins trois éléments de maintien sont agencés dans la zone de l'ouverture (12),
- les éléments de maintien sont réalisés en tant que bras d'encliquetage (20),
- les bras d'encliquetage (20) présentent un crochet en saillie (26), et
- les bras d'encliquetage (20) présentent une section de liaison (22), par le biais de laquelle les bras d'encliquetage (20) sont reliés à un élément du logement (11) entourant l'ouverture (12),
**caractérisé en ce**
- **que** les bras d'encliquetage (20) présentent une section de crochet (24) s'étendant sensiblement orthogonalement à la section de liaison (22),
dans lequel une première direction d'extension de la section de liaison (22) et une deuxième direction d'extension de la section de crochet (24) se trouvent dans un plan, et
- **que** les crochets (26) des bras d'encliquetage (20) s'étendent sensiblement orthogonalement à la section de crochet (24),
dans lequel une direction d'extension pour le crochet (26) se rapporte à un axe du crochet (26), qui est orthogonal au plan décrit précédemment.

2. Dispositif de maintien selon la revendication 1, dans lequel les bras d'encliquetage (20) présentent dans la transition de la section de crochet (24) au crochet (26) un chanfrein (28), qui fait face à l'extrémité libre (27) du crochet (26).

3. Dispositif de maintien selon l'une quelconque des revendications 1 ou 2, dans lequel les bras d'encliquetage (20) sont agencés uniformément répartis au niveau du logement (11).

4. Dispositif de maintien selon l'une quelconque des revendications 1 à 3, dans lequel les bras d'encliquetage (20) sont fabriqués en un plastique.

5. Dispositif de maintien selon l'une quelconque des revendications 1 à 4, dans lequel le dispositif de maintien (10) est fabriqué dans un procédé de moulage par inj ection.

6. Dispositif de maintien selon l'une quelconque des revendications 1 à 5, dans lequel le dispositif de maintien (10) fait partie d'une structure porteuse (18) d'une pièce de véhicule automobile.

7. Module présentant au moins un dispositif de maintien (10) selon l'une quelconque des revendications 1 à 6 et une unité de montage qui y est reliée, dans lequel l'unité de montage présente un nombre de deuxièmes logements (32) correspondant au nombre de bras d'encliquetage (20), dans lesquels les bras d'encliquetage (20) sont insérés.

8. Module selon la revendication 7, dans lequel les deuxièmes logements (32) présentent une rampe (36) et un bras d'encliquetage (20) inséré est fixé là-dessus contre une sortie.

9. Module selon la revendication 7 ou 8, dans lequel les deuxièmes logements (32) présentent un chanfrein (35), lequel est agencé dans la zone d'une ouverture d'introduction (34).

10. Module selon la revendication 8 et 9, dans lequel la rampe (36) et le chanfrein (35) se font face et font partie d'un crochet (33).

11. Module selon l'une quelconque des revendications 7 à 10, dans lequel l'unité de montage est un haut-parleur ou un dispositif d'éclairage.
